# EUROPEAN PATENT SPECIFICATION

(11) **EP 2 548 041 B1**
(45) Date of publication and mention of the grant of the patent: **27.07.2016**
(21) Application number: 10847645.8
(22) Date of filing: 17.03.2010
(51) Int. Cl.: G01S 5/06, G01S 13/87

(54) **SYSTEMS AND METHODS FOR SHORT BASELINE, LOW COST DETERMINATION OF AIRBORNE AIRCRAFT LOCATION**
SYSTEME UND VERFAHREN FÜR DIE KOSTENGÜNSTIGE ORTSBESTIMMUNG EINES FLUGZEUGS IN DER LUFT MIT KURZER BASISLINIE
SYSTÈMES ET PROCÉDÉS POUR LA DÉTERMINATION SUR COURTE LIGNE DE BASE ET À BAS COÛT D'UNE LOCALISATION D'AÉRONEF EN VOL

(43) Date of publication of application: 23.01.2013
(73) Proprietor: Honeywell International Inc., Morris Plains, NJ 07950 (US)
(72) Inventor: WANG, Guoqing, Beijing 100016 (CN)
(74) Representative: Houghton, Mark Phillip
(86) International application number: PCT/CN2010/000323
(87) International publication number: WO 2011/113176

(56) References cited:
- WO-A1-98/05977
- US-A- 5 424 746
- US-A- 5 999 116
- US-A1- 2007 040 734
- US-A1- 2007 252 760
- US-A1- 2008 231 494
- US-B2- 7 170 441
- US-B2- 7 170 441
- US-B2- 7 298 323

## Description

### BACKGROUND OF THE INVENTION

Demand for air travel is forecast to continue to increase at an extraordinary rate in both mature and developing markets. In the U.S., some forecasts indicate that passenger numbers may increase by up to 140% over the next twenty years with aircraft movements increasing up to threefold, depending on the mix of small and larger aircraft. In Europe, some organizations predict similar challenges, with the number of flights predicted to increase by 150% over the same period. In developing markets such as China, Asia-Pacific, and South America the growth is expected to be even greater.

Radar control is an important method of providing air traffic control services. Such radar control improves the safety of air traffic, and increases the airspace capacity, compared to airspace regions that use non-radar aircraft procedure control. Air traffic radar surveillance is limited partially because of the cost of the ground-based surveillance equipment and facilities, and the fact that there are varying types of air traffic control equipment installed in aircraft. Many aircraft have no installed air traffic control equipment.

Further, the reliability of air traffic surveillance radar systems is also critical to maintain a high efficiency of air traffic controlling. A failure of air traffic surveillance radar may disrupt normal flight operations. Further, such failures may pose a hazard to aircraft that rely on supplemental control provided by the air traffic surveillance radar systems.

Further, some geographic regions have poor or no air traffic surveillance radar systems. For example, Western and Northern parts of China have poor air traffic radar coverage. And, there will be increasing demands of air traffic radar coverage because of new airport construction plans in many parts of China. Up to forty-five new airports are planned for construction in China during the eleventh (11^{th}) 5-year plan, and fifty-two new airports are planned from year 2011 to 2020. These plans do not include airports for general aviation, which will further increase air traffic.

Various air traffic surveillance systems are available for air traffic control. Automatic dependent surveillance-broadcast (ADS-B) systems installed on aircraft periodically communicate information that can be used to determine airborne aircraft location. However, the location information provided in such communications may not be reliable under all conditions. Mode C/S transponders installed on aircraft communicate information that can be used to determine aircraft location in response to receiving interrogation signals, this method depends on expensive Secondary Surveillance Radar (SSR) ground facility.

Some prior art aircraft location systems employ global positioning system (GPS) information. However, such systems will fail when GPS information is unavailable, or is in error. Further, some geographic regions do not have access to GPS information.

Accordingly, there is a need to provide low cost, high accuracy and robust air traffic surveillance systems for airports that are not equipped with traditional radar facilities.

US Patent No. 7,170,441 B2 by Perl et al. discloses a method for locating a target, where the method includes a distributed antenna, comprising receiving elements in known locations, and one of the receiving elements is also a transmitter that transmits an interrogation signal to a target.

US Patent Application No. 2007/0252760 A1 by Smith et al. discloses a method for tracking aircraft or other vehicles, where the method includes multilateration and elliptical surveillance, which allows for targets to be tracked from moving reception points.

US Patent Application No. 2007/0040734 A1 by Evers et al. discloses a standalone elliptical-based air traffic surveillance system and for use with multilateration surveillance systems.

US Patent Application No. 2008/0231494 A1 by Galati discloses a system for locating and identifying aircraft and other vehicles on the basis of reception by multiple stations of SSR signals transmitted by the standard SSR transponder on board.

PCT Publication No. WO 98/05977 A1 by ERA A.S. discloses a system for location of objects, mainly aircraft, where at least three receiving stations are spaced apart from each other on places with known coordinates, and received signals emitted from object's emitter are retransmitted in real-time from all receiving stations into one processing station with known coordinates.

### SUMMARY OF THE INVENTION

The present invention provides a method as defined in claim 1. The method may include the features of any one or more of dependent claims 2 to 6.

The present invention also provides a system as defined in claim 7. The system may include the features of any one or more of dependent claims 8 to 10.

Systems and methods of locating airborne aircraft are disclosed. An exemplary embodiment communicates an interrogation signal to an Air Traffic Control Radar Beacon System (ATCRBS) or mode S transponder equipped airborne aircraft and to a plurality of slave ground receivers from a master ground station. Each of the slave ground receivers receive the interrogation signal from the master ground station and synchronize their system time with the master ground station, respectively. The master ground station and the plurality of slave ground receivers receive interrogation reply signals from the airborne aircraft. The master ground station determines a time of arrival (TOA) of the reply signal at master ground station and respective ones of the TOA of the reply signal received at the slave ground receivers. A location of the airborne aircraft is determined based on at least one of a multilateration calculation and an elliptical calculation using at least three TOAs.

Additionally, or alternatively, the master ground station and plurality slave ground receivers may also passively listen to the automatic dependent surveillance-broadcast (ADS-B) squitters from an ADS-B capable Mode S transponder equipped airborne aircraft, determine each time TOA of the squitter signal at master ground station and the slave ground receivers, decode the position message from received position squitters and determine the aircraft position. The TOAs are used to verify the airborne aircraft reported position.

### BRIEF DESCRIPTION OF THE DRAWINGS

Preferred and alternative embodiments are described in detail below with reference to the following drawings:
FIGURE 1 is a conceptual diagram illustrating operation of an embodiment of the short baseline multilateration system;
FIGURE 2 is a block diagram of exemplary components residing in a master ground station; and
FIGURE 3 is a block diagram of exemplary components residing in one of a plurality of slave ground receivers.

### DETAILED DESCRIPTION OF THE PREFERRED EMBODIMENT

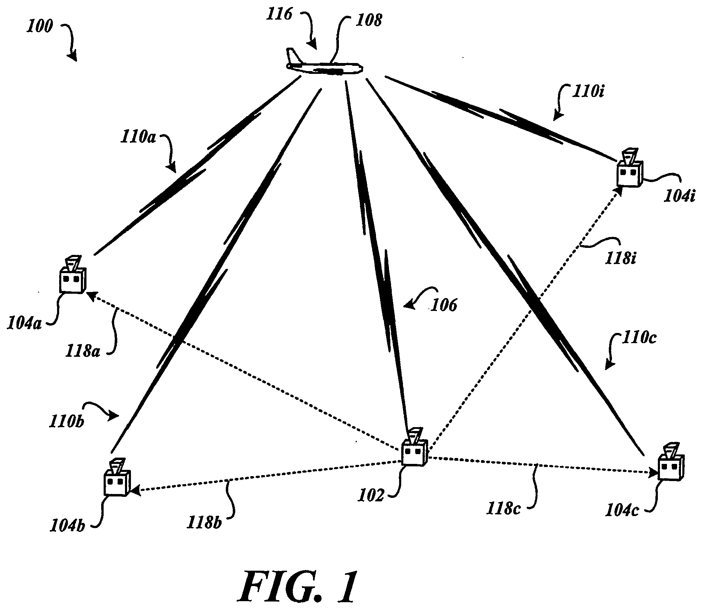

FIGURE 1 is a conceptual diagram illustrating operation of an embodiment of the short baseline positioning system 100. An exemplary embodiment of the short baseline positioning system 100 comprises a master ground station 102 and a plurality of slave ground receivers 104*a*-104*i*.

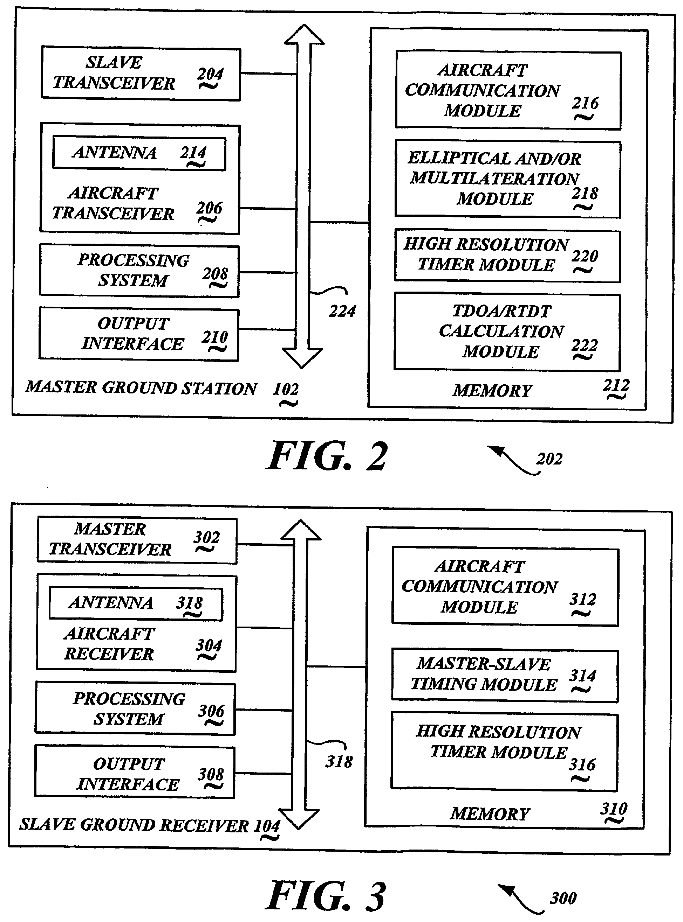

FIGURE 2 is a block diagram of exemplary components 202 residing in the master ground station 102. The components 202 of the master ground station 102 comprise a slave transceiver 204, a ground station aircraft transceiver 206, a processing system 208, an output interface 210, a memory 212, and an antenna 214. In an exemplary embodiment, the antenna 214 emits an interrogation signal to the aircraft 108 and receives aircraft replies and/or squitters. The antenna 214 may be an omni-directional antenna. Portions of the memory 212 are configured to store an aircraft communication module 216, an elliptical and/or multilateration module 218, an optional high resolution timer module 220, and a time difference of arrival (TDOA) and/or round trip delay time (RTDT) calculation module 222. The optional high resolution timer module 220 provides nanosecond level timing for acceptable bearing resolution. The master station 102 can have more components and may be more complex than its respective slave sites 104.

The slave transceiver 204, the ground station aircraft transceiver 206, the processing system 208, the output interface 210, and the memory 212 are communicatively coupled to a communication bus 224, thereby providing connectivity between the above-described components. In alternative embodiments of the short baseline positioning system 100, the above-described components may be communicatively coupled to each other in a different manner. For example, one or more of the above-described components may be directly coupled to the processing system 208, or may be coupled to the processing system 208 via intermediary components (not shown). Further, additional components (not shown) may be included in alternative embodiments of the master ground station 102.

FIGURE 3 is a block diagram of exemplary components 300 residing in one of the plurality of slave ground receivers 104. The components 300 of the exemplary slave ground receiver 104 comprise a master transceiver 302, an aircraft receiver 304, a processing system 306, an optional output interface 308, and a memory 310. In an exemplary embodiment, portions of the memory 310 are configured to store an aircraft communication module 312, and a master-slave timing module 314. Some embodiments may include an optional high resolution timer module 316. Modules 312, 314, and/or 316 may be integrated with each other and/or may be integrated with other modules (not shown) in alternative embodiments. The aircraft receiver 304 may include an antenna 318. The antenna 214 may be an omni-directional antenna. Preferably, the slave ground receiver 104 should be as simple as possible so as to easily expand the number of slave receivers 104 without too much additional expense, thereby significantly improving the aircraft location resolution accuracy.

The master transceiver 302, the aircraft receiver 304, the processing system 306, the user interface 308, and the memory 310 are communicatively coupled to a communication bus 318, thereby providing connectivity between the above-described components. In alternative embodiments of the short baseline positioning system 100, the above-described components may be communicatively coupled to each other in a different manner. For example, one or more of the above-described components may be directly coupled to the processing system 306, or may be coupled to the processing system 306 via intermediary components (not shown). Further, additional components (not shown) may be included in alternative embodiments of the slave ground receiver 104.

It is appreciated that one or more various signal communicating systems may reside in a particular aircraft 108. For example, the aircraft 108 may be equipped with Mode A or Mode C signal transponders. The Mode A/C transponder transmits a reply signal in response to detecting a Mode A/C interrogation signal incident on the aircraft 108 emitted by the aircraft transceiver 206 of the master ground station 102, commonly referred to as a "squawk" signal or the like. The mode C signal includes barometric pressure altitude information.

Alternatively, or additionally, the aircraft 108 may include a Mode S type transponder that is responsive to a Mode S interrogation signal emitted from the aircraft transceiver 206 residing at the master ground station 102. The Mode S interrogation signal includes a unique identifier assigned to the aircraft 108 that elicits an interrogation reply signal from the aircraft 108. The aircraft 108 emits the interrogation reply signal in response to receiving an interrogation signal having its unique identifier. The mode S signal includes barometric pressure altitude information.

Some aircraft 108 may include automatic dependant surveillance-broadcast (ADS-B) capabilities that incorporate global positioning system (GPS) location information. An airborne ADS-B capable Mode S transponder spontaneously emits RF signals, known as squitters. Some squitters include encoded aircraft position information. However, such information might not be available or reliable when GPS signals are unavailable, in error, or under intentional spoof In situations where the GPS location information is available, the GPS location information may be used for location verification after multilateration and/or elliptical calculated aircraft location is determined based on time of arrivals (TOAs) of signals received at the master ground station 102 and the slave ground receivers 104. Active Mode S interrogations are preferably transmitted to the aircraft 108 when such location verification fails.

In an exemplary embodiment, the master ground station 102 communicates an interrogation signal to the aircraft 108. The radar signal or other suitable interrogation signal is emitted from the antenna 214 of the aircraft transceiver 206. For example, a Whisper-Shout interrogation signal sequence is transmitted for Mode A/C transponder equipped aircrafts. The Whisper-Shout interrogation sequence is transmitted periodically, such as, but not limited to, every second (even through there are no airborne aircraft 108 in the vicinity of the master ground station 102). Alternatively, or additionally, a Mode S interrogation is transmitted for a non-ADS-B capable Mode S transponder equipped aircraft 108, or for an ADS-B capable Mode S transponder equipped aircraft 108 which failed in the above-described location verification.

In response, a transponder (not shown) on the aircraft 108 communicates an interrogation reply signal 106 that is received by the aircraft transceiver 206 at the master ground station 102. The control of generating the interrogation signal and receiving the interrogation reply signal 106 is managed by the processing system 208 executing the aircraft communication module 216. Processing system 208 may additionally be, or integrated with, a video processing system.

The interrogation signal emitted from master ground station 102 to the airborne aircraft 108 further acts as timing signals 118a-118*i*. The timing signals 118a-118*i* may be received by aircraft receiver 304 on slave ground receivers 104, or may be received by a dedicated receiver. The control of generating the interrogation signal, as well as the timing signals 118*a*-118*i*, is managed by the processing system 208 executing the master-slave timing module 220 and the aircraft communication module 216. In an exemplary embodiment, the interrogation signal transmitting is carefully scheduled at pre-determined time marks, recorded as the Time Of Transmit (TOT).

Accurate determination of the location 116 of the aircraft 108 is predicated, in part, on the timing signals 118a-118*i* that are communicated from the master ground station 102 to the plurality of slave ground receivers 104a-104*i*. The timing signals 118a-118*i* are used to synchronize the system time of the master-slave timing module 314 at the slave receivers 104a-104*i*, respectively.

For example, the exact time that a particular the timing signal 118a is received by slave ground receiver 104a is TOT + Offset_{SaM}, where the Offset_{SaM} is the time that the timing signal travels from master ground station 102 to the slave ground receiver 104a. The exact time that the timing signal 118b is received by slave ground receiver 104b is TOT + Offset_{SbM}, where the Offset_{SbM} is the time that the timing signal travels from master ground station 102 to the slave ground receiver 104b. The exact time that the timing signal 118*i* is received by slave receiver 104i is TOT + Offset_{SiM}, where the Offset_{SiM} is the time that the timing signal travels from master ground station 102 to the slave ground receiver 104i. The TOT includes a specially defined time mark that is recognized and tracked by the slave ground receivers 104a-104*i*. The timer of master-slave timing module 314 at the slave ground receiver 104 may be frequently synchronized by use of the timing signals 118. In an exemplary embodiment, the control of receiving the timing signals 118a-118*i* and time synchronization are managed by the aircraft receiver 304 executing the master-slave timing module 314.

Offset_{SaM}, Offset_{SbM}, and Offset_{SiM} are known fixed values once the installation of the short baseline positioning system 100 is completed. That is, since the location of each of the slave ground receivers 104a-104*i* with respect to the master ground station 102 is precisely known, the offsets can be precisely determined.

In the various embodiments, a short baseline distance between the master ground station 102 and the slave ground receivers 104a-104*i* enable communication of highly aligned timing signals. Further, the electronic components 202, 300 are under similar temperature/humidity operating conditions. Thus, the components 202, 300 will have substantially identical response times for receiving and processing the interrogation reply signals 106, 110a-110*i*. Accordingly, precise TOA information is available for determination of the location 116.

In an exemplary embodiment, the short baseline distance is on the order of two hundred (200) meters. Accordingly, embodiments of the short baseline positioning system 100 may be fit within, or in proximity to, a medium to large scale airport. Embodiments may also be configured for installation at small general aviation airports when one or more of the slave ground receivers 104a-104i is located in close proximity to the small general aviation airport.

In some embodiments, the master ground station 102 emits a dedicated timing signal 118 to the slave ground receivers 104a-104*i*. In such embodiments, the aircraft receiver 304 of slave receiver 104 detects the timing signal and synchronizes the system time. The optional high resolution timer module 316 is configured to further facilitate control of the timing of the received timing signals 118 and the received interrogation reply signals 110a-110*i*.

It is appreciated that the communicated interrogation reply signals 110a-110*i* are originated at the same time as the interrogation reply 106, and preferably, are the same emitted signal with portions of the emitted signal from the aircraft 108 travelling different directions and travelling for different times to the master ground station 102 and the plurality of slave ground receivers 104a-104*i*. For purposes of describing the various embodiments, component portions of the signal emitted from the aircraft 108 are separately described and illustrated as the interrogation reply signal 106 and the interrogation reply signals 110a-110*i*.

In some embodiments, the interrogation reply signal 106 and the interrogation reply signals 110a-110*i* is a squitter signal. The squitter signal may be periodically transmitted from the airborne aircraft 108. Accordingly, the interrogation signal transmitted form the master ground station 102 is optional for an ADS-B capable transponder equipped airborne aircraft, and/or is transmitted after receipt of the squitter signal.

When the interrogation reply signals 110a-110*i* are received, TOAs corresponding to the received interrogation reply signals 110a-110*i* are communicated to the master ground station 102. The communicated TOA information indicates the precise time that the respective interrogation reply signals 110a-110*i* were received at the respective ones of the slave ground receivers 104a-104*i*. In an exemplary embodiment, communication of the TOA information is managed by the master transceivers 302 at the slave ground receivers 104a-104*i* and the slave transceiver 204 at the master ground station 102.

The information corresponding to the received interrogation reply signals 110a-110*i* that is communicated to the master ground station 102, and optionally the timing signals 118a-118*i*, may be communicated using any suitable wire-based and/or wireless communication medium. Further, different communication media may be used. For example, the master ground station 102 may be communicatively coupled to the slave ground receiver 104a via a legacy telephony system, a coaxial cable, a fiber optic cable, or other suitable wire-based medium. As another example, if the slave ground receiver 104b is located in a remote location, the master ground station 102 may be communicatively coupled to the slave ground receiver 104b via a suitable wireless system, such as, but not limited to, a radio frequency (RF) system or an infrared system.

The processing system 208, executing the TDOA/RTDT calculation module 222, performs TDOA and/or RTDT calculations based on the time that the interrogation reply signal 106 is received (and/or the time ADS-B squitter signal is received) at the aircraft transceiver 206 at the master ground station 102, and the time that the interrogation reply signals 110a-110*i* are received (and/or the time ADS-B squitter signal is received) at the aircraft receivers 304 at the slave ground receivers 104a-104*i*.

The TOA_{M} is derived from the time of the interrogation reply signal 106 that is received by aircraft transceiver 206 at the master ground station 102. The TDOA_{SaM} is derived from TOA_{Sa}, which is the time of the interrogation reply 110a that is received by aircraft receiver 304 at slave ground receiver 104a, wherein TDOA_{SaM} = TOA_{Sa} - TOA_{M}.

Similarly, the TDOA_{SbM} is derived from TOA_{Sb}, the time of the interrogation reply signal 110b received by aircraft receiver 304 at slave ground receiver 104b, wherein TDOA_{SbM} = TOA_{Sb} - TOA_{M}. The TDOA_{SaSb} is derived from TOA_{Sa} and TOA_{Sb}, wherein TDOA_{SaSb} = TOA_{Sa} - TOA_{Sb}. Optionally, the TDOA_{SiM} and TDOA_{SiSj} are derived from TOA_{Si}, TOA_{M}, and TOA_{Si}, TOA_{Sj}, respectively.

The round trip delay time (RTDT_{SaM}) corresponds to the time that the interrogation signal was transmitted from the master ground station 102 and the interrogation reply signal 110a is received at the slave ground receiver 104a-104i. RTDT_{SaM} is derived from time of transmit (TOT) which corresponds to the time of the interrogation signal is transmitted from the master station 102, and TOA_{Sa}, which corresponds to the time that the interrogation reply signal 110a is received by aircraft receiver 304 at slave ground receiver 104a. Accordingly, RTDT_{SaM} = TOA_{Sa} - TOT.

Similarly, the RTDT_{SbM} is derived from TOT, and TOA_{Sb}, which corresponds to the time that the interrogation reply signal 110b is received by aircraft receiver 304 at slave ground receiver 104b. Accordingly, RTDT_{SbM} = TOA_{Sb} - TOT. Optionally, the RTDT_{SiM} is derived from TOA_{Si} and TOT.

The processing system 208, executing the elliptical and/or multilateration module 218, performs multilateration calculations and/or elliptical calculations to determine the location 116 of the airborne aircraft using at least the TDOAs, and the RTDTs when available.

When altitude information is received in the interrogation reply signal 106 and/or 110a-110*i*, and/or is received in a squitter signal, the location 116 of the aircraft 108 may be determined in three dimensional (3-D) space by multilateration calculations based on TDOA_{SaM}, TDOA_{SbM}, TDOA_{SaSb}. Moreover, the solution of the airborne aircraft location 116 can be optimized by elliptical calculations based on RTDT_{SaM}, RTDT_{SbM} for interrogation reply signal 106 and/or 110a-110*i*.

If altitude information is not available, then the location 116 of the aircraft 108 may be determined in two-dimensional (2D) space.

A more accurate determination of the location 116 of the aircraft 108 may then be determined by using parameters from the additional slave ground receivers 104*i*.

The decoded position from a received ADS-B position squitter is determined at the master ground station 102 for an ADS-B capable transponder equipped airborne aircraft. The location 116 can be verified with parameters from two or more slave ground receivers 104a-104*i* by calculated position determined as described above.

In some embodiments, a decoded position of the airborne aircraft 108 may be verified based upon the calculated 2-D or 3-D location 116 determined by the short baseline positioning system 100. The position of the aircraft 108 is decoded from information received from the aircraft 108. Further, the decoded position of the airborne aircraft may be tracked if the verification passed based upon the calculated 2-D or 3-D location 116.

In some embodiments, a plurality of the interrogation signals are communicated from the master ground station 102 at pre-defined scheduled time windows. Accordingly, the plurality slave ground receivers 104a-104*i* track the time of communication of the plurality of the interrogation signals for time synchronization.

Output interfaces 210, 308 are provided to enable service personnel or other electronic systems to receive the aircraft location information determined by embodiments of the short baseline positioning system 100. In some embodiments, the interfaces 210 and/or 308 provide information to an air traffic control system. The determined aircraft location information may then be integrated with other available air traffic control information.

While the preferred embodiment of the invention has been illustrated and described, as noted above, many changes can be made without departing from the scope of the invention. Accordingly, the scope of the invention its not limited by the disclosure of the preferred embodiment. Instead, the invention should be determined entirely by reference to the claims that follow.

## Claims

1. A method for locating an airborne aircraft (108), the method comprising:
communicating an interrogation signal to the airborne aircraft (108) and a plurality of slave ground receivers (104a-104i) from a master ground station (102), wherein the interrogation signal is communicated at a time of transmit, TOT, from the master ground station (102), and wherein the interrogation signal communicated to each of the plurality of slave ground receivers (104a-104i) is a timing signal (118a-118i) used by each of the plurality of slave ground receivers (104a-104i) to synchronize a system time;
receiving a first interrogation reply signal (106) from the airborne aircraft (108) at the master ground station (102);
determining a first time of arrival, TOA, using the first interrogation reply signal (106);
receiving a second interrogation reply signal (110a) at a first slave ground receiver of the plurality of slave ground receivers (104a-104i);
determining a second TOA using the second interrogation reply signal (110a);
receiving a third interrogation reply signal (110i) at a second slave ground receiver of the plurality of slave ground receivers (104a-104i);
determining a third TOA using the third interrogation reply signal (110i); and
determining at least a two dimensional location (116) of the airborne aircraft (108) based on at least one of a multilateration calculation or an elliptical calculation, wherein the multilateration calculation uses three time difference of arrivals, TDOAs, wherein the elliptical calculation uses two round trip delay times, RTDTs, and wherein the three TDOAs and the two RTDTs are determined from a combination of the TOT, the first TOA, the second TOA, and the third TOA.

2. The method of Claim 1, further comprising:
receiving altitude information of the airborne aircraft in at least one of the received first interrogation reply signal, the second interrogation reply signal and the third interrogation reply signal; and
determining a three dimensional location of the airborne aircraft based on the multilateration calculation using a combination of the TOT, the first TOA, the second TOA, the third TOA, and the altitude information.

3. The method of Claim 2, further comprising:
receiving a fourth interrogation reply signal at a third slave ground receiver of the plurality of slave ground receivers;
determining a fourth TOA using the fourth interrogation reply signal; and
determining a more accurate location of the airborne aircraft based on the at least one of the multilateration calculation or the elliptical calculation, wherein the multilateration calculation uses six TDOAs, wherein the elliptical calculation uses three RTDTs, and wherein the six TDOAs and the two RTDTs are determined from a combination of the TOT, the first TOA, the second TOA, the third TOA and the fourth TOA.

4. The method of Claim 1, wherein communicating the interrogation signal to the airborne aircraft and a plurality of slave ground receivers from the master ground station comprises:
emitting an interrogation radar signal towards the airborne aircraft from the master ground station,
wherein the first interrogation reply signal, the second interrogation reply signal, and the third interrogation reply signal are emitted from the airborne aircraft in response to the emitted radar signal being incident on the airborne aircraft.

5. The method of Claim 1, further comprising:
receiving the interrogation signal at the first slave ground receiver and the second slave ground receiver, wherein the first and second slave ground receivers receive the interrogation signal from the master ground station by at least one of an aircraft receiver or a dedicated receiver,
wherein the received interrogation signal is associated with a time that the interrogation signal is communicated, and
wherein the second interrogation reply signal and the third interrogation reply signal are associated with the time.

6. The method of Claim 1, wherein the first interrogation reply signal, the second interrogation reply signal, and the third interrogation reply signal are portions of a reply signal emitted from the airborne aircraft in response to the airborne aircraft receiving the interrogation signal.

7. An airborne aircraft location determination system, comprising:
a master ground station (102) configured to emit an interrogation signal to an airborne aircraft (108) and a plurality of slave ground receivers (104a-104i), and configured to receive at least one of a first interrogation reply signal (106) and a first squitter signal from the airborne aircraft, and wherein the interrogation signal communicated to each of the plurality of slave ground receivers (104a-104i) is a timing signal (118a-118i) used by each of the plurality of slave ground receivers (104a-104i) to synchronize a system time;
a first slave ground receiver (104a) of the plurality of slave ground receivers (104a-104i) configured to receive the interrogation signal from the master ground station (102), configured to receive at least one of a second interrogation reply signal (110a) and a second squitter signal from the airborne aircraft, and configured to communicate first information associated with the received at least one of the second interrogation reply signal (110a) and the second squitter signal to the master ground station (102); and
a second slave ground receiver (104b) of the plurality of slave ground receivers (104a-104i) configured to receive the interrogation signal from the master ground station (102), configured to receive at least one of a third interrogation reply signal (110b) and a third squitter signal from the airborne aircraft, and configured to communicate second information associated with the received at least one of the third interrogation reply signal (110b) and the squitter signal to the master ground station (102),
wherein a time of transmit, TOT, of the interrogation signal is determined at the master ground station (102),
wherein a first time of arrival, TOA, is determined using the at least one of the first interrogation reply signal (106) and the first squitter signal,
wherein a second TOA is determined using the first information associated with the at least one of the second interrogation reply signal (110a) and the second squitter signal,
wherein a third TOA is determined using the second information associated with the at least one of the third interrogation reply signal (110b) and the third squitter signal, and
wherein a location (116) of the airborne aircraft (108) is determined based on at least one of a multilateration calculation or an elliptical calculation, using a combination of the TOT, first TOA, the second TOA, and the third TOA.

8. The airborne aircraft location determination system of Claim 7, further comprising:
a first transceiver residing at the master ground station, wherein the at least one of the first interrogation reply signal and the first squitter signal is a first portion of a radio frequency signal emitted by the airborne aircraft;
a second receiver residing at the first slave ground receiver, wherein the at least one of the second interrogation reply signal and the second squitter signal is a second portion of the radio frequency signal emitted by the airborne aircraft; and
a third receiver residing at the second slave ground receiver, wherein the at least one of the third interrogation reply signal and the third squitter signal is a third portion of the radio frequency signal emitted by the airborne aircraft.
wherein the radio frequency interrogation signal emitted by the first transceiver is received by the second receiver residing at the first slave ground receiver and is received by the third receiver residing at the second slave ground receiver, wherein the second and third receivers are each at least one of an aircraft receiver or a dedicated receiver, wherein the received radio frequency interrogation signal is associated with a time that the interrogation signal is communicated using pre-defined time windows, and wherein the second interrogation reply signal and the third interrogation reply signal are associated with the time.

9. The airborne aircraft location determination system of Claim 8, further comprising:
a third slave ground receiver of the plurality of slave ground receivers configured to receive the interrogation signal from master station, configured to receive at least one of a fourth interrogation reply signal and a fourth squitter signal from the airborne aircraft, and configured to communicate third information associated with the at least one of the received fourth interrogation reply signal and the fourth squitter signal to the master ground station,
wherein a fourth TOA is determined using the at least one of the fourth interrogation reply signal and the fourth squitter signal, and
wherein a more accurate location of the airborne aircraft is determined based on at least one of the multilateration calculation or the elliptical calculation, using a combination of the TOT, first TOA, the second TOA, the third TOA and the fourth TOA.

10. The airborne aircraft location determination system of Claim 8,
wherein altitude information of the airborne aircraft is determined from at least one of the first interrogation reply signal and the first squitter signal, at least one of the second interrogation reply signal and the second squitter signal, and
at least one of the third interrogation reply signal and the third squitter signal, and
wherein a three-dimensional location of the airborne aircraft is determined based on at least one of the multilateration calculation or the elliptical calculation, using a combination of the TOT, the first TOA, the second TOA, the third TOA, and the altitude information.

## Patentansprüche

1. Verfahren zum Lokalisieren eines Flugzeuges in der Luft (108), wobei das Verfahren Folgendes umfasst:
Vermitteln eines Abfragesignals an das Flugzeug in der Luft (108) und eine Vielzahl von Slave-Bodenempfängern (104a bis 104i) von einer Master-Bodenstation (102), wobei das Abfragesignal zu einer Sendezeit, TOT (Time of Transmit), von der Master-Bodenstation (102) vermittelt wird, und wobei es sich bei dem Abfragesignal, das an jeden der Vielzahl von Slave-Bodenempfängern (104a bis 104i) vermittelt wird, um ein Zeitsteuerungssignal (118a bis 118i) handelt, das von jedem der Vielzahl von Slave-Bodenempfängern (104a bis 104i) verwendet wird, um eine Systemzeit zu synchronisieren;
Empfangen eines ersten Abfrageantwortsignals (106) von dem Flugzeug in der Luft (108) an der Master-Bodenstation (102);
Bestimmen einer ersten Ankunftszeit, TOA (Time of Arrival), unter Verwendung des ersten Abfrageantwortsignals (106);
Empfangen eines zweiten Abfrageantwortsignals (110a) an einem ersten Slave-Bodenempfänger der Vielzahl von Slave-Bodenempfängern (104a bis 104i) ;
Bestimmen einer zweiten TOA unter Verwendung des zweiten Abfrageantwortsignals (110a) ;
Empfangen eines dritten Abfrageantwortsignals (110i) an einem zweiten Slave-Bodenempfänger der Vielzahl von Slave-Bodenempfängern (104a bis 104i) ;
Bestimmen einer dritten TOA unter Verwendung des dritten Abfrageantwortsignals (110i); und
Bestimmen mindestens eines zweidimensionalen Aufenthaltsortes (116) des Flugzeuges in der Luft (108) auf der Basis von mindestens einer, entweder einer Multilaterationsberechnung oder einer elliptischen Berechnung, wobei für die Multilaterationsberechnung drei Unterschiede in der Ankunftszeit, TDOAs (Time Difference of Arrivals), verwendet werden, wobei für die elliptische Berechnung zwei Umlaufzeiten, RTDTs (Round Trip Delay Times), verwendet werden, und wobei die drei TDOAs und die zwei RTDTs aus einer Kombination der TOT, der ersten TOA, der zweiten TOA und der dritten TOA bestimmt werden.

2. Verfahren nach Anspruch 1, das des Weiteren Folgendes umfasst:
Empfangen der Höheninformationen des Flugzeuges in der Luft in mindestens einem, entweder dem empfangenen ersten Abfrageantwortsignal, dem zweiten Abfrageantwortsignal oder dem dritten Abfrageantwortsignal; und
Bestimmen eines dreidimensionalen Aufenthaltsortes des Flugzeuges in der Luft auf der Basis der Multilaterationsberechnung unter Verwendung einer Kombination der TOT, der ersten TOA, der zweiten TOA, der dritten TOA und der Höheninformationen.

3. Verfahren nach Anspruch 2, das des Weiteren Folgendes umfasst:
Empfangen eines vierten Abfrageantwortsignals an einem dritten Slave-Bodenempfänger der Vielzahl von Slave-Bodenempfängern;
Bestimmen einer vierten TOA unter Verwendung des vierten Abfrageantwortsignals; und
Bestimmen eines genaueren Aufenthaltsortes des Flugzeuges in der Luft auf der Basis mindestens einer, entweder der Multilaterationsberechnung oder der elliptischen Berechnung, wobei für die Multilaterationsberechnung sechs TDOAs verwendet werden, wobei für die elliptische Berechnung drei RTDTs verwendet werden, und wobei die sechs TDOAs und die zwei RTDTs aus einer Kombination der TOT, der ersten TOA, der zweiten TOA, der dritten TOA und der vierten TOA bestimmt werden.

4. Verfahren nach Anspruch 1, wobei das Vermitteln des Abfragesignals an das Flugzeug in der Luft und eine Vielzahl von Slave-Bodenempfängern von der Master-Bodenstation Folgendes umfasst:
Aussenden eines Abfrageradarsignals in Richtung des Flugzeuges in der Luft von der Master-Bodenstation,
wobei das erste Abfrageantwortsignal, das zweite Abfrageantwortsignal und das dritte Abfrageantwortsignal von dem Flugzeug in der Luft als Reaktion darauf ausgesendet werden, dass das ausgesendete Radarsignal auf das Flugzeug in der Luft auftrifft.

5. Verfahren nach Anspruch 1, das des Weiteren Folgendes umfasst:
Empfangen des Abfragesignals an dem ersten Slave-Bodenempfänger und dem zweiten Slave-Bodenempfänger, wobei der erste und der zweite Slave-Bodenempfänger das Abfragesignal von der Master-Bodenstation durch mindestens einen, entweder einen Flugzeugempfänger oder einen zweckgebundenen Empfänger, empfangen,
wobei das empfangene Abfragesignal einem Zeitpunkt zugeordnet ist, zu dem das Abfragesignal vermittelt wird, und
wobei das zweite Abfrageantwortsignal und das dritte Abfrageantwortsignal dem Zeitpunkt zugeordnet sind.

6. Verfahren nach Anspruch 1, wobei das erste Abfrageantwortsignal, das zweite Abfrageantwortsignal und das dritte Abfrageantwortsignal Teile eines Antwortsignals sind, das von dem Flugzeug in der Luft als Reaktion darauf ausgesendet wird, dass das Flugzeug in der Luft das Abfragesignal empfängt.

7. Bestimmungssystem des Aufenthaltsortes des Flugzeuges in der Luft, das Folgendes umfasst:
eine Master-Bodenstation (102), die dazu ausgestaltet ist, ein Abfragesignal an ein Flugzeug in der Luft (108) und eine Vielzahl von Slave-Bodenempfängern (104a bis 104i) auszusenden, und dazu ausgestaltet ist, mindestens eins, entweder ein erstes Abfrageantwortsignal (106) oder ein erstes Squitter-Signal, von dem Flugzeug in der Luft zu empfangen, und wobei es sich bei dem Abfragesignal, das an jeden der Vielzahl von Slave-Bodenempfängern (104a bis 104i) vermittelt wird, um ein Zeitsteuerungssignal (118a bis 118i) handelt, das von jedem der Vielzahl von Slave-Bodenempfängern (104a bis 104i) verwendet wird, um eine Systemzeit zu synchronisieren;
einen ersten Slave-Bodenempfänger (104a) der Vielzahl von Slave-Bodenempfängern (104a bis 104i), der dazu ausgestaltet ist, das Abfragesignal von der Master-Bodenstation (102) zu empfangen, dazu ausgestaltet ist, mindestens eins, entweder ein zweites Abfrageantwortsignal (110a) oder ein zweites Squitter-Signal, von dem Flugzeug in der Luft zu empfangen, und dazu ausgestaltet ist, erste Informationen, die dem empfangenen mindestens einen, entweder dem zweiten Abfrageantwortsignal (110a) oder dem zweiten Squitter-Signal, zugeordnet sind, der Master-Bodenstation (102) zu vermitteln; und
einen zweiten Slave-Bodenempfänger (104b) der Vielzahl von Slave-Bodenempfängern (104a bis 104i), der dazu ausgestaltet ist, das Abfragesignal von der Master-Bodenstation (102) zu empfangen, dazu ausgestaltet ist, mindestens eins, entweder ein drittes Abfrageantwortsignal (110b) oder ein drittes Squitter-Signal, von dem Flugzeug in der Luft zu empfangen, und dazu ausgestaltet ist, zweite Informationen, die dem empfangenen mindestens einen, entweder dem dritten Abfrageantwortsignal (110b) oder dem Squitter-Signal, zugeordnet sind, der Master-Bodenstation (102) zu vermitteln,
wobei eine Sendezeit, TOT, des Abfragesignals an der Master-Bodenstation (102) bestimmt wird,
wobei eine erste Ankunftszeit, TOA, unter Verwendung des mindestens einen, entweder des ersten Abfrageantwortsignals (106) oder des ersten Squitter-Signals, bestimmt wird,
wobei eine zweite TOA unter Verwendung der ersten Informationen, die dem mindestens einen, entweder dem zweiten Abfrageantwortsignal (110a) oder dem zweiten Squitter-Signal, zugeordnet sind, bestimmt wird,
wobei eine dritte TOA unter Verwendung der zweiten Informationen, die dem mindestens einen, entweder dem dritten Abfrageantwortsignal (110b) oder dem dritten Squitter-Signal, zugeordnet sind, bestimmt wird, und
wobei ein Aufenthaltsort (116) des Flugzeuges in der Luft (108) auf der Basis von mindestens einer, entweder einer Multilaterationsberechnung oder einer elliptischen Berechnung, unter Verwendung einer Kombination der TOT, ersten TOA, der zweiten TOA und der dritten TOA bestimmt wird.

8. Bestimmungssystem des Aufenthaltsortes des Flugzeuges in der Luft nach Anspruch 7, das des Weiteren Folgendes umfasst:
einen ersten Sender-/Empfänger, der in der Master-Bodenstation resident ist, wobei es sich bei dem mindestens einen, entweder dem ersten Abfrageantwortsignal oder dem ersten Squitter-Signal, um einen ersten Teil eines Funkfrequenzsignals handelt, das durch das Flugzeug in der Luft ausgesendet wird;
einen zweiten Empfänger, der in dem ersten Slave-Bodenempfänger resident ist, wobei es sich bei dem mindestens einen, entweder dem zweiten Abfrageantwortsignal oder dem zweiten Squitter-Signal, um einen zweiten Teil des Funkfrequenzsignals handelt, das durch das Flugzeug in der Luft ausgesendet wird; und
einen dritten Empfänger, der in dem zweiten Slave-Bodenempfänger resident ist, wobei es sich bei dem mindestens einen, entweder dem dritten Abfrageantwortsignal oder dem dritten Squitter-Signal, um einen dritten Teil des Funkfrequenzsignals handelt, das durch das Flugzeug in der Luft ausgesendet wird;
wobei das Funkfrequenz-Abfragesignal, das durch den ersten Sender-/Empfänger ausgesendet wird, durch den zweiten Empfänger, der in dem ersten Slave-Bodenempfänger resident ist, empfangen wird, und durch den dritten Empfänger, der in dem zweiten Slave-Bodenempfänger resident ist, empfangen wird, wobei es sich bei dem zweiten und dem dritten Empfänger jeweils um mindestens einen, entweder einen Flugzeugempfänger oder einen zweckgebundenen Empfänger, handelt, wobei das empfangene Funkfrequenz-Abfragesignal einem Zeitpunkt zugeordnet ist, zu dem das Abfragesignal unter Verwendung der zuvor definierten Zeitfenster vermittelt wird, und wobei das zweite Abfrageantwortsignal und das dritte Abfrageantwortsignal dem Zeitpunkt zugeordnet sind.

9. Bestimmungssystem des Aufenthaltsortes des Flugzeuges in der Luft nach Anspruch 8, das des Weiteren Folgendes umfasst:
einen dritten Slave-Bodenempfänger der Vielzahl von Slave-Bodenempfängern, der dazu ausgestaltet ist, das Abfragesignal von der Master-Station zu empfangen, dazu ausgestaltet ist, mindestens eins, entweder ein viertes Abfrageantwortsignal oder ein viertes Squitter-Signal, von dem Flugzeug in der Luft zu empfangen, und dazu ausgestaltet ist, dritte Informationen, die dem mindestens einen, entweder dem empfangenen vierten Abfrageantwortsignal oder dem vierten Squitter-Signal, zugeordnet sind, der Master-Bodenstation zu vermitteln,
wobei eine vierte TOA unter Verwendung des mindestens einen, entweder des vierten Abfrageantwortsignals oder des vierten Squitter-Signals, bestimmt wird, und
wobei ein genauerer Aufenthaltsort des Flugzeuges in der Luft auf der Basis von mindestens einer, entweder der Multilaterationsberechnung oder der elliptischen Berechnung, unter Verwendung einer Kombination der TOT, ersten TOA, der zweiten TOA, der dritten TOA und der vierten TOA bestimmt wird.

10. Bestimmungssystem des Aufenthaltsortes des Flugzeuges in der Luft nach Anspruch 8,
wobei die Höheninformationen des Flugzeuges in der Luft aus mindestens einem, entweder dem ersten Abfrageantwortsignal oder dem ersten Squitter-Signal, mindestens einem, entweder dem zweiten Abfrageantwortsignal oder dem zweiten Squitter-Signal, und
mindestens einem, entweder dem dritten Abfrageantwortsignal oder dem dritten Squitter-Signal, bestimmt werden, und
wobei ein dreidimensionaler Aufenthaltsort des Flugzeuges in der Luft auf der Basis von mindestens einer, entweder der Multilaterationsberechnung oder der elliptischen Berechnung, unter Verwendung einer Kombination der TOT, der ersten TOA, der zweiten TOA, der dritten TOA und der Höheninformationen bestimmt wird.

## Revendications

1. Procédé pour localiser un aéronef en vol (108), lequel procédé consiste à :
- communiquer un signal d'interrogation à l'aéronef en vol (108) et à plusieurs récepteurs esclaves au sol (104a-104i) depuis une station au sol maître (102), lequel signal d'interrogation est communiqué à un temps de transmission (TOT) depuis la station au sol maître (102), et dans lequel le signal d'interrogation communiqué à chacun desdits plusieurs récepteurs esclaves au sol (104a-104i) est un signal de synchronisation (118a-118i) utilisé par chacun desdits plusieurs récepteurs esclaves au sol (104a-104i) afin de synchroniser un temps système ;
- recevoir un premier signal de réponse d'interrogation (106) depuis l'aéronef en vol (108) au niveau de la station au sol maître (102) ;
- déterminer un premier temps d'arrivée (TOA) en utilisant le premier signal de réponse d'interrogation (106) ;
- recevoir un deuxième signal de réponse d'interrogation (110a) au niveau d'un premier récepteur esclave au sol parmi lesdits plusieurs récepteurs esclaves au sol (104a-104i) ;
- déterminer un deuxième TOA en utilisant le deuxième signal de réponse d'interrogation (110a) ;
- recevoir un troisième signal de réponse d'interrogation (110i) au niveau d'un deuxième récepteur esclave au sol parmi lesdits plusieurs récepteurs esclaves au sol (104a-104i) ;
- déterminer un troisième TOA en utilisant le troisième signal de réponse d'interrogation (110i) ; et
- déterminer au moins un emplacement bidimensionnel (116) de l'aéronef en vol (108) en fonction de l'un au moins d'un calcul multilatéral et d'un calcul elliptique, le calcul multilatéral utilisant trois différences de temps d'arrivée (TDOA) tandis que le calcul elliptique utilise deux temps de retard d'aller-retour (RTDT), et dans lequel les trois TDOA et les deux RTDT sont déterminés à partir d'une combinaison du TOT, du premier TOA, du deuxième TOA et du troisième TOA.

2. Procédé selon la revendication 1, consistant en outre à :
- recevoir des informations d'altitude de l'aéronef en vol dans l'un au moins du premier signal de réponse d'interrogation reçu, du deuxième signal de réponse d'interrogation et du troisième signal de réponse d'interrogation ; et
- déterminer un emplacement tridimensionnel de l'aéronef en vol à partir du calcul multilatéral en utilisant une combinaison du TOT, du premier TOA, du deuxième TOA, du troisième TOA et des informations d'altitude.

3. Procédé selon la revendication 2, consistant en outre à :
- recevoir un quatrième signal de réponse d'interrogation au niveau d'un troisième récepteur esclave au sol parmi lesdits plusieurs récepteurs esclaves au sol ;
- déterminer un quatrième TOA en utilisant le quatrième signal de réponse d'interrogation ; et
- déterminer un emplacement plus précis de l'aéronef en vol en fonction de l'un au moins du calcul multilatéral et du calcul elliptique, dans lequel le calcul multilatéral utilise six TDOA, le calcul elliptique utilise trois RTDT, et les six TDOA et les deux RTDT sont déterminés à partir d'une combinaison du TOT, du premier TOA, du deuxième TOA, du troisième TOA et du quatrième TOA.

4. Procédé selon la revendication 1, dans lequel la communication du signal d'interrogation à l'aéronef en vol et à plusieurs récepteurs esclaves au sol depuis la station au sol maître consiste à :
- émettre un signal radar d'interrogation vers l'aéronef en vol depuis la station au sol maître, dans lequel le premier signal de réponse d'interrogation, le deuxième signal de réponse d'interrogation et le troisième signal de réponse d'interrogation sont émis depuis l'aéronef en vol lorsque le signal radar émis est incident sur l'aéronef en vol.

5. Procédé selon la revendication 1, consistant en outre à :
- recevoir le signal d'interrogation au niveau du premier récepteur esclave au sol et du deuxième récepteur esclave au sol, les premier et deuxième récepteurs esclaves au sol recevant le signal d'interrogation depuis la station au sol maître à l'aide de l'un au moins d'un récepteur d'aéronef et d'un récepteur dédié,
dans lequel le signal d'interrogation reçu est associé à un temps où le signal d'interrogation est communiqué ; et
dans lequel le deuxième signal de réponse d'interrogation et le troisième signal de réponse d'interrogation sont associés au temps.

6. Procédé selon la revendication 1, dans lequel le premier signal de réponse d'interrogation, le deuxième signal de réponse d'interrogation et le troisième signal de réponse d'interrogation sont des parties d'un signal de réponse émis depuis l'aéronef en vol lorsque l'aéronef en vol reçoit le signal d'interrogation.

7. Système de détermination d'un emplacement d'aéronef en vol, comprenant :
- une station au sol maître (102) conçue pour émettre un signal d'interrogation à un aéronef en vol (108) et à plusieurs récepteurs esclaves au sol (104a-104i), et conçue pour recevoir l'un au moins d'un premier signal de réponse d'interrogation (106) et d'un premier signal de radar secondaire depuis l'aéronef en vol, et dans lequel le signal d'interrogation communiqué à chacun desdits plusieurs récepteurs esclaves au sol (104a-104i) est un signal de synchronisation utilisé par chacun desdits plusieurs récepteurs esclaves au sol (104a-104i) afin de synchroniser un temps système ;
- un premier récepteur esclave au sol (104a) parmi lesdits plusieurs récepteurs esclaves au sol (104a-104i) conçu pour recevoir le signal d'interrogation depuis la station au sol maître (102), conçu pour recevoir l'un au moins d'un deuxième signal de réponse d'interrogation (110a) et d'un deuxième signal de radar secondaire depuis l'aéronef en vol, et conçu pour communiquer des premières informations associées à l'un au moins du deuxième signal de réponse d'interrogation (110a) et du deuxième signal de radar secondaire reçus à la station maître au sol (102) ; et
- un deuxième récepteur esclave au sol (104b) parmi lesdits plusieurs récepteurs esclaves au sol (104a-104i) conçu pour recevoir le signal d'interrogation depuis la station maître au sol (102), conçu pour recevoir l'un au moins d'un troisième signal de réponse d'interrogation (110b) et d'un troisième signal de radar secondaire depuis l'aéronef en vol, et conçu pour communiquer des secondes informations associées à l'un au moins du troisième signal de réponse d'interrogation (110b) et du signal de radar secondaire reçus à la station maître au sol (102),
dans lequel un temps de transmission (TOT) du signal d'interrogation est déterminé au niveau de la station maître au sol (102) ;
dans lequel un premier temps d'arrivée (TOA) est déterminé en utilisant l'un au moins du premier signal de réponse d'interrogation (106) et du premier signal de radar secondaire ;
dans lequel un deuxième TOA est déterminé en utilisant les premières informations associées à l'un au moins du deuxième signal de réponse d'interrogation (110a) et du deuxième signal de radar secondaire ;
dans lequel un troisième TOA est déterminé en utilisant les secondes informations associées à l'un au moins du troisième signal de réponse d'interrogation (110b) et du troisième signal de radar secondaire ; et dans lequel un emplacement (116) de l'aéronef en vol (108) est déterminé en fonction de l'un au moins d'un calcul multilatéral et d'un calcul elliptique en utilisant une combinaison du TOT, du premier TOA, du deuxième TOA et du troisième TOA.

8. Système de détermination d'un emplacement d'aéronef en vol selon la revendication 7, comprenant en outre :
- un premier émetteur-récepteur situé au niveau de la station maître au sol, dans lequel l'un au moins du premier signal de réponse d'interrogation et du premier signal de radar secondaire est une première partie d'un signal radiofréquence émis par l'aéronef en vol ;
- un deuxième récepteur situé au niveau du premier récepteur esclave au sol, dans lequel l'un au moins du deuxième signal de réponse d'interrogation et du deuxième signal de radar secondaire est une deuxième partie du signal radiofréquence émis par l'aéronef en vol ; et
- un troisième récepteur situé au niveau du deuxième récepteur esclave au sol, dans lequel l'un au moins du troisième signal de réponse d'interrogation et du troisième signal de radar secondaire est une troisième partie du signal radiofréquence émis par l'aéronef en vol,
dans lequel le signal d'interrogation radiofréquence émis par le premier émetteur-récepteur est reçu par le deuxième récepteur situé au niveau du premier récepteur esclave au sol et par le troisième récepteur situé au niveau du deuxième récepteur esclave au sol, dans lequel le deuxième et troisième récepteur sont chacun l'un au moins d'un récepteur d'aéronef ou d'un récepteur dédié, dans lequel le signal d'interrogation radiofréquence reçu est associé à un temps où le signal d'interrogation est communiqué en utilisant des créneaux de temps prédéfinis, et dans lequel le deuxième signal de réponse d'interrogation et le troisième signal de réponse d'interrogation sont associés au temps.

9. Système de détermination d'un emplacement d'aéronef en vol selon la revendication 8, comprenant en outre :
- un troisième récepteur esclave au sol parmi lesdits plusieurs récepteurs esclaves au sol conçu pour recevoir un signal d'interrogation depuis la station maître, conçu pour recevoir l'un au moins d'un quatrième signal de réponse d'interrogation et d'un quatrième signal de radar secondaire depuis l'aéronef en vol, et conçu pour communiquer des troisièmes informations associées à l'un au moins du quatrième signal de réponse d'interrogation et du quatrième signal de radar secondaire reçus à la station au sol maître,
dans lequel un quatrième TOA est déterminé en utilisant l'un au moins du quatrième signal de réponse d'interrogation et du quatrième signal de radar secondaire ; et
dans lequel un emplacement plus précis de l'aéronef en vol est déterminé en fonction de l'un au moins du calcul multilatéral et du calcul elliptique en utilisant une combinaison du TOT, du premier TOA, du deuxième TOA, du troisième TOA et du quatrième TOA.

10. Système de détermination d'un emplacement d'aéronef en vol selon la revendication 8,
- dans lequel des informations d'altitude de l'aéronef en vol sont déterminées à partir de l'un au moins du premier signal de réponse d'interrogation et du premier signal de radar secondaire, de l'un au moins du deuxième signal de réponse d'interrogation et du deuxième signal de radar secondaire et de l'un au moins du troisième signal de réponse d'interrogation et du troisième signal de radar secondaire ; et
- dans lequel un emplacement tridimensionnel de l'aéronef en vol est déterminé en fonction de l'un au moins du calcul multilatéral et du calcul elliptique, en utilisant une combinaison du TOT, du premier TOA, du deuxième TOA, du troisième TOA et des informations d'altitude.
